# EUROPEAN PATENT SPECIFICATION

(11) **EP 3 247 141 B1**
(45) Date of publication and mention of the grant of the patent: **12.12.2018**
(21) Application number: 17163262.3
(22) Date of filing: 30.01.2014
(51) Int. Cl.: H04W 12/00, H04W 16/32, H04W 76/15, H04L 29/06

(54) **SECURITY ACTIVATION FOR DUAL CONNECTIVITY**
SICHERHEITSAKTIVIERUNG FÜR DOPPELTE KONNEKTIVITÄT
ACTIVATION DE SÉCURITÉ POUR DOUBLE CONNECTIVITÉ

(30) Priority: 30.01.2013 US 201361758380 P
(43) Date of publication of application: 22.11.2017
(62) Divisional of application: 14707475.1
(73) Proprietor: Telefonaktiebolaget LM Ericsson (publ), 164 83 Stockholm (SE)
(72) Inventor: WAGER, Stefan, FI-02360 ESPOO (FI); NORRMAN, Karl, SE-116 28 STOCKHOLM (SE); JOHANSSON, Niklas, SE-191 38 SOLLENTUNA (SE); TEYEB, Oumer, SE-171 44 SOLNA (SE); VIRKKI, Vesa, 02320 ESPOO (FI)
(74) Representative: Ericsson

(56) References cited:
- EP-A1- 2 139 175
- WO-A1-2013/116976
- CN-A- 102 448 060
- US-A1- 2008 076 392

## Description

### TECHNICAL FIELD

The technology disclosed herein relates generally to wireless telecommunications networks, and more particularly relates to techniques for activating data security features in dual connectivity scenarios, i.e., scenarios in which a mobile terminal is connected to multiple base stations simultaneously.

### BACKGROUND

In a typical cellular radio system, mobile terminals (also referred to as user equipment, UEs, wireless terminals, and/or mobile stations) communicate via a radio access network (RAN) with one or more core networks, which provide access to data networks, such as the Internet, and/or to the public-switched telecommunications network (PSTN). A RAN covers a geographical area that is divided into cell areas, with each cell area being served by a radio base station (also referred to as a base station, a RAN node, a "NodeB", and/or an enhanced NodeB or "eNodeB"). A cell area is a geographical area over which radio coverage is provided by the base station equipment at a base station site. The base stations communicate through radio communication channels with wireless terminals within range of the base stations.

Cellular communications system operators have begun offering mobile broadband data services based on, for example, WCDMA (Wideband Code-Division Multiple Access), HSPA (High-Speed Packet Access), and Long Term Evolution (LTE) wireless technologies. Fueled by the introduction of new devices designed for data applications, end user performance requirements continue to increase. The increased adoption of mobile broadband has resulted in significant growth in traffic handled by high-speed wireless data networks. Accordingly, techniques that allow cellular operators to manage networks more efficiently are desired.

Techniques to improve downlink performance may include Multiple-Input-Multiple-Output (MIMO) multi-antenna transmission techniques, multi-flow communication, multi-carrier deployment, etc. Since spectral efficiencies per link may be approaching theoretical limits, next steps may include improving spectral efficiencies per unit area. Further efficiencies for wireless networks may be achieved, for example, by changing a topology of traditional networks to provide increased uniformity of user experiences throughout a cell. One approach is through the deployment of so-called heterogeneous networks.

A homogeneous network is a network of base stations (also referred to as NodeB's, enhanced NodeB's, or eNBs) in a planned layout, providing communications services for a collection of user terminals (also referred to as user equipment nodes, UEs, and/or wireless terminals), in which all base stations typically have similar transmit power levels, antenna patterns, receiver noise floors, and/or backhaul connectivity to the data network. Moreover, all base stations in a homogeneous network may generally offer unrestricted access to user terminals in the network, and each base station may serve roughly a same number of user terminals. Current cellular wireless communications systems in this category may include, for example, GSM (Global System for Mobile communication), WCDMA, HSDPA (High Speed Downlink Packet Access), LTE (Long Term Evolution), WiMAX (Worldwide Interoperability for Microwave Access), etc.

In a heterogeneous network, low power base stations (also referred to as low power nodes (LPNs), micro nodes, pico nodes, femto nodes, relay nodes, remote radio unit nodes, RRU nodes, small cells, RRUs, etc.) may be deployed along with or as an overlay to planned and/or regularly placed macro base stations. A macro base station (MBS) may thus provide service over a relatively large macro cell area, and each LPN may provide service for a respective relatively small LPN cell area within the relatively large macro cell area.

Power transmitted by an LPN may be relatively small, e.g., 2 Watts, compared to power transmitted by a macro base station, which may be 40 Watts for a typical macro base station. An LPN may be deployed, for example, to reduce/eliminate a coverage hole(s) in the coverage provided by the macro base stations, and/or to off-load traffic from macro base stations, such as to increase capacity in a high traffic location or so-called hot-spot. Due to its lower transmit power and smaller physical size, an LPN may offer greater flexibility for site acquisition.

Thus, a heterogeneous network features a multi-layered deployment of high-power nodes (HPNs), such as macro base stations, and low-power nodes (LPNs), such as so-called pico-base stations or pico-nodes. The LPNs and HPNs in a given region of a heterogeneous network may operate on the same frequency, in which case the deployment may be referred to as a co-channel heterogeneous deployment, or on different frequencies, in which case the deployment may be referred to as an inter-frequency or multi-carrier or multi-frequency heterogeneous deployment.

The Third Generation Partnership Project (3GPP) is continuing to develop specifications for advanced and improved features in the context of the fourth-generation wireless telecommunications system known as LTE (Long Term Evolution). In Release 12 of the LTE specifications and beyond, further enhancements related to low-power nodes and heterogeneous deployments will be considered under the umbrella of "small-cell enhancements" activities. Some of these activities will focus on achieving an even higher degree of interworking between the macro and low-power layers, including through the use of a set of techniques and technology referred to as "dual-layer connectivity" or simply "dual connectivity".

In this respect, the teaching of prior art document US 2008/076392 relates to dual connectivity in heterogeneous networks.

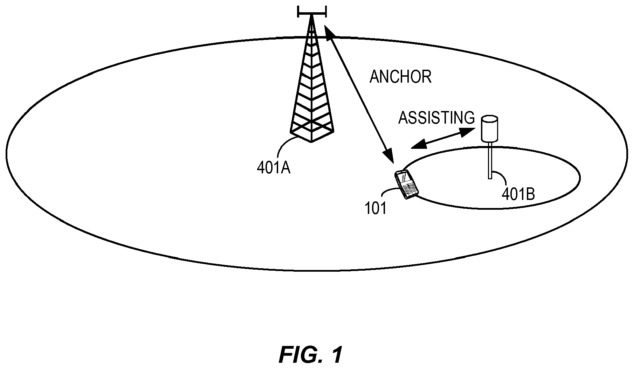

As shown in Figure 1, dual connectivity implies that the device has simultaneous connections to both macro and low-power layers. Figure 1 illustrates an example of a heterogeneous network in which a mobile terminal 101 uses multiple flows, e.g., an anchor flow from the macro base station (or "anchor eNB") 401A and an assisting flow from a pico base station (or an "assisting eNB") 401B. Note that terminology may vary - the anchor base station and assisting base station in a configuration like that shown in Figure 1 may sometimes be referred to as "master" and "slave" base stations or according to other names. It should be further noted that while the terms "anchor/assisting" and "master/slave" suggest a hierarchical relationship between the base stations involved in a dual connectivity scenario, many of the principles and techniques associated with dual connectivity may be applied to deployment scenarios where there is no such hierarchical relationship, e.g., between peer base stations. Accordingly, while the terms "anchor base station" and "assisting base station" are used herein, it should be understood that the techniques and apparatus described herein are not limited to embodiments that use that terminology, nor are they necessarily limited to embodiments having the hierarchical relationship suggested by Figure 1.

Dual connectivity may imply, in various embodiments and/or scenarios:
- Control and data separation where, for instance, the control signaling for mobility is provided via the macro layer at the same time as high-speed data connectivity is provided via the low-power layer.
- A separation between downlink and uplink, where downlink and uplink connectivity is provided via different layers.
- Diversity for control signaling, where Radio Resource Control (RRC) signaling may be provided via multiple links, further enhancing mobility performance.

Macro assistance including dual connectivity may provide several benefits:
- Enhanced support for mobility - by maintaining the mobility anchor point in the macro layer, as described above, it is possible to maintain seamless mobility between macro and low-power layers, as well as between low-power nodes.
- Low overhead transmissions from the low-power layer - by transmitting only information required for individual user experience, it is possible to avoid overhead coming from supporting idle-mode mobility within the local-area layer, for example.
- Energy-efficient load balancing - by turning off the low-power nodes when there is no ongoing data transmission, it is possible to reduce the energy consumption of the low-power layer.
- Per-link optimization - by selecting the termination point for uplink and downlink separately, the node selection can be optimized for each link.

One of the problems in using dual connectivity is how to map the data radio bearers (DRBs) onto the anchor flow and assisting flow, respectively. One option for splitting the DRBs between two base stations, as shown in Figure 1, is to keep the control plane (RRC) in the anchor eNB and distribute the Packet Data Convergence Protocol (PDCP) entities so that some of them are in the anchor eNB and some of them in the assisting eNB. As discussed in further detail below, this approach may yield some important system efficiency benefits. However, this approach creates problems related to the activation of security features that are used for confidentiality and integrity protection of the data transmitted to and from the mobile terminal.

### SUMMARY

In a dual-connectivity scenario, the assisting base station and the anchor base station may not support the same set of security algorithms. Further, the anchor base station may not know ahead of time which of several assisting base stations (each potentially supporting different algorithms) will be used to serve the wireless terminal in a dual-connectivity scenario.

These issues are addressed by the several methods and apparatus disclosed herein for determining a security algorithm to be used for secured communications between a wireless terminal and a second node while the wireless terminal is dually connected to a first node and to the second node. An example method, suitable for implementation in the first of these nodes, includes determining a first set of security algorithms, the first set including those algorithms supported by the wireless terminal. This determining may include, for example, receiving information from a core network node, the information identifying which security algorithms are supported by the wireless terminal. A second set of security algorithms is also determined, where the second set includes those security algorithms that are supported by the second node. In some embodiments, this determining includes receiving information from the second node, the information identifying which security algorithms are supported by the second node. At least one security algorithm is then indicated to the second node, wherein the indicated security algorithm is chosen from the intersection of the first and second sets.

In some embodiments, the method further includes indicating the security algorithm to the wireless terminal. In some embodiments, this is done in a Radio Resource Control (RRC) Security Mode Command sent to the wireless terminal. In some of these embodiments, the Security Mode Command further indicates to which physical cell identity (PCI) the indicated security algorithm applies. In some of these and in other embodiments, indicating the security algorithm to the wireless terminal is performed at the same time as informing the wireless terminal of one or more security algorithms to be used for secured communications between the wireless terminal and the first node.

In other embodiments, indicating the security algorithm to the wireless terminal comprises indicating the security algorithm in a RRC Connection Reconfiguration procedure. In some of these and in some other embodiments, indicating the security algorithm to the wireless terminal includes an indication of whether the security algorithm applies to the uplink direction or downlink direction of a data radio bearer.

Another example method, suitable for implementation in the second node referred to above, includes receiving, from the first node, an indication of the security algorithm to be used for secured communications between the wireless terminal and the second node. The method further includes using the indicated security algorithm for secured communications between the wireless terminal and the second node while the wireless terminal is dually connected to the first node and to the second node.

In some embodiments, the second node sends, to the wireless terminal, an indication of the indicated security algorithm. In some of these and in some other embodiments, the second node, prior to receiving the indication of the security algorithm from the first node, sends to the first node information identifying which security algorithms the second node supports.

Other embodiments of the technology disclosed herein include network node apparatus and mobile terminal apparatus, each configured to carry out one of the example methods summarized above or variants thereof.

### BRIEF DESCRIPTION OF DRAWINGS

Figure 1 is a schematic diagram illustrating an example of a heterogeneous dual connectivity deployment with simultaneous anchor and assisting flows to a mobile terminal.
Figure 2 illustrates components of the E-UTRAN system architecture.
Figure 3 illustrates details of the base station protocol architecture in a dual-connectivity scenario.
Figure 4 is a process flow diagram illustrating an example method as implemented by a first node.
Figure 5 is a process flow diagram illustrating an example method as implemented by a second node.
Figure 6 is a process flow diagram illustrating an example method as implemented by a first node.
Figure 7 is a process flow diagram illustrating an example method as implemented by a second node.
Figure 8 is a block diagram illustrating an example anchor base station apparatus, according to the presently disclosed techniques.
Figure 9 is a block diagram illustrating an example assisting base station apparatus, according to the presently disclosed techniques.

### DETAILED DESCRIPTION

Inventive concepts will now be described more fully hereinafter with reference to the accompanying drawings, in which examples of embodiments of inventive concepts are shown. These inventive concepts may, however, be embodied in many different forms and should not be construed as limited to the embodiments set forth herein. Rather, these embodiments are provided so that this disclosure will be thorough and complete, and fully convey the scope of present inventive concepts to those skilled in the art. It should also be noted that these embodiments are not mutually exclusive. Components from one embodiment may be tacitly assumed to be present or used in another embodiment.

For purposes of illustration and explanation only, these and other embodiments of present inventive concepts are described herein in the context of operating in a Radio Access Network (RAN) that communicates over radio communication channels with mobile terminals (also referred to as wireless terminals or UEs). As used herein, a mobile terminal, wireless terminal, or UE can include any device that receives data from a communication network, and may include, but is not limited to, a mobile telephone ("cellular" telephone), laptop/portable computer, pocket computer, hand-held computer, desktop computer, a machine to machine (M2M) or MTC type device, a sensor with a wireless communication interface, etc.

The Universal Mobile Telecommunications System (UMTS) is a third generation mobile communication system, which evolved from the Global System for Mobile Communications (GSM), and is intended to provide improved mobile communication services based on Wideband Code Division Multiple Access (WCDMA) technology. UTRAN, short for UMTS Terrestrial Radio Access Network, is a collective term for the Node B's and Radio Network Controllers that make up the UMTS radio access network. Thus, UTRAN is essentially a radio access network using wideband code division multiple access (WCDMA) for UEs.

The Third Generation Partnership Project (3GPP) has undertaken to further evolve the UTRAN and GSM based radio access network technologies. In this regard, specifications for the Evolved Universal Terrestrial Radio Access Network (E-UTRAN) are ongoing within 3GPP. The Evolved Universal Terrestrial Radio Access Network (E-UTRAN) comprises the Long Term Evolution (LTE) and System Architecture Evolution (SAE).

Note that although terminology from LTE is generally used in this disclosure to exemplify embodiments of the inventive concepts, this should not be seen as limiting the scope of inventive concepts to only these systems. Other wireless systems, including variations and successors of 3GPP LTE and WCDMA systems, WiMAX (Worldwide Interoperability for Microwave Access), UMB (Ultra Mobile Broadband), HSDPA (High-Speed Downlink Packet Access), GSM (Global System for Mobile Communications), etc., may also benefit from exploiting embodiments of present inventive concepts disclosed herein.

Also note that terminology such as base station (also referred to as NodeB, eNodeB, or Evolved Node B) and wireless terminal or mobile terminal (also referred to as User Equipment node or UE) should be considering non-limiting and does not imply a certain hierarchical relation between the two. In general, a base station (e.g., a "NodeB" or "eNodeB") and a wireless terminal (e.g., a "UE") may be considered as examples of respective different communications devices that communicate with each other over a wireless radio channel.

While embodiments discussed herein may focus on example embodiments in which described solutions are applied in heterogeneous networks that include a mix of relatively higher-power base stations (e.g., "macro" base stations, which may also be referred to as wide-area base stations or wide-area network nodes) and relatively lower-power nodes (e.g., "pico" base stations, which may also be referred to as local-area base stations or local-area network nodes), the described techniques may be applied in any suitable type of network, including both homogeneous and heterogeneous configurations. Thus, the base stations involved in the described configurations may be similar or identical to one another, or may differ in terms of transmission power, number of transmitter-receiver antennas, processing power, receiver and transmitter characteristics, and/or any other functional or physical capability.

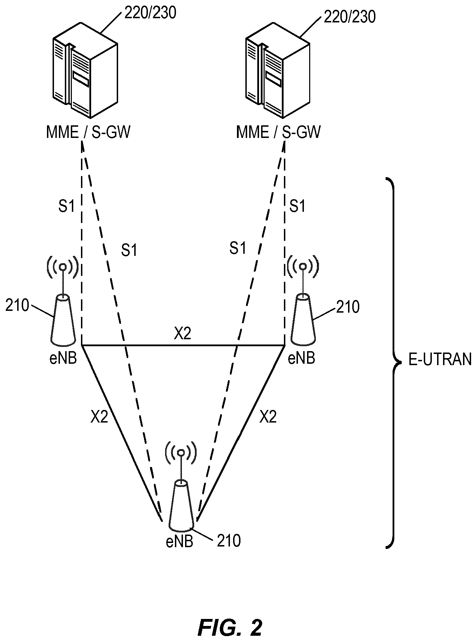

The Evolved UMTS Terrestrial Radio Access Network (E-UTRAN) includes base stations called enhanced NodeBs (eNBs or eNodeBs), providing the E-UTRA user plane and control plane protocol terminations towards the UE. The eNBs are interconnected with each other using the X2 interface. The eNBs are also connected using the S1 interface to the EPC (Evolved Packet Core), more specifically to the MME (Mobility Management Entity) by means of the S1-MME interface and to the Serving Gateway (S-GW) by means of the S1-U interface. The S1 interface supports many-to-many relation between MMEs/S-GWs and eNBs. A simplified view of the E-UTRAN architecture is illustrated in Figure 2.

The eNB 210 hosts functionalities such as Radio Resource Management (RRM), radio bearer control, admission control, header compression of user plane data towards serving gateway, and/or routing of user plane data towards the serving gateway. The MME 220 is the control node that processes the signaling between the UE and the CN (core network). Significant functions of the MME 220 are related to connection management and bearer management, which are handled via Non Access Stratum (NAS) protocols. The S-GW 230 is the anchor point for UE mobility, and also includes other functionalities such as temporary DL (down link) data buffering while the UE is being paged, packet routing and forwarding to the right eNB, and/or gathering of information for charging and lawful interception. The PDN Gateway (P-GW, not shown in Figure 2) is the node responsible for UE IP address allocation, as well as Quality of Service (QoS) enforcement (as further discussed below). The reader is referred to 3GPP TS 36.300 and the references therein for further details of functionalities of the different nodes.

In describing various embodiments of the presently disclosed techniques, the non-limiting term radio network node may be used to refer any type of network node serving UE and/or connected to other network node or network element or any radio node from where UE receives signal. Examples of radio network nodes are Node B's, base stations (BS), multistandard radio (MSR) radio nodes such as MSR BS's, eNodeB's, network controllers, radio network controllers (RNCs), base station controllers, relays, donor nodes controlling relays, base transceiver stations (BTS), access points (AP), wireless routers, transmission points, transmission nodes, remote radio units (RRUs), remote radio heads (RRHs), nodes in a distributed antenna system (DAS), etc.

In some cases a more general term "network node" is used; this term may correspond to any type of radio network node or any network node that communicates with at least a radio network node. Examples of network nodes are any radio network node stated above, core network nodes (e.g., MSC, MME, etc.), O&M, OSS, SON, positioning nodes (e.g., E-SMLC), MDT, etc.

In describing some embodiments, the term user equipment (UE) is used, and refers to any type of wireless device communicating with a radio network node in a cellular or mobile communication system. Examples of UEs are target devices, device-to-device UEs, machine-type UEs or UEs capable of machine-to-machine communication, PDAs, wireless-enabled table computers, mobile terminals, smart phones, laptop embedded equipped (LEE), laptop mounted equipment (LME), USB dongles, customer premises equipment (CPE), etc. The term "mobile terminal" as used herein should be understood as being generally interchangeable with the term UE as used herein and in the various specifications promulgated by the 3GPP, but should not be understood as being limited to devices compliant to 3GPP standards.

The example embodiments presented herein are specifically directed towards security activation when the LTE Uu-protocol stack is split between a macro cell and an assisting eNB cell. However, the techniques and apparatus are more generally applicable to security activation in other dual-connectivity scenarios.

As noted above, one option for splitting data radio bearers (DRBs) between two base stations in a dual-connectivity scenario is to keep the control plane, which is managed by the Radio Resource Control (RRC) protocol, in the anchor eNB, while distributing the Packet Data Convergence Protocol (PDCP) entities, which are associated with individual radio bearers, so that one or more are terminated in the anchor eNB and one or more in the assisting eNB

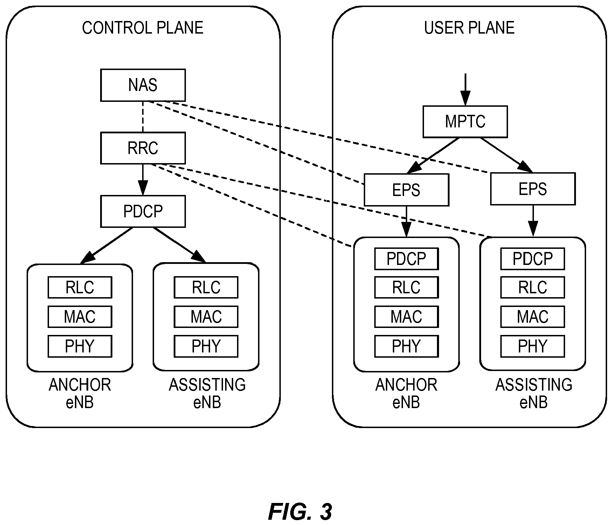

The RRC layer configures all PDCP entities with which it is associated. This is illustrated in Figure 3, which shows an example of a protocol architecture for multiple connectivity.

More particularly, RRC configures the PDCP entities with cryptographic keys and configuration data, such as data indicating which security algorithms should be applied in connection with the corresponding radio bearer. For connections associated with a given mobile terminal, RRC configures all PDCP entities for user plane traffic (DRB) with one and the same encryption key, KUP-enc, and all PDCP entities for control plane traffic (SRB) with one and the same encryption key, KRRC-enc, and one and the same integrity protection key, KRRC-int. For DRBs used to protect data between a donor-eNB and a relay node, RRC also configures the DRBs with an integrity protection key, KUP-int.

Since the anchor eNB and the assisting eNB may be implemented in separate physical nodes, the assumption that RRC can configure the PDCP entities via internal application program interfaces (APIs) no longer holds. That is to say, the current situation where the security configuration data can be assumed to be safely kept inside the physically secure environment of the eNB no longer stands. Instead, the RRC entity in the anchor eNB has to configure the PDCP entities in the assisting eNB, which is outside of the secure environment of the anchor eNB.

Anchor eNB and assisting eNB are used here to define different roles of eNBs from a UE or wireless terminal perspective. It is acknowledged that this is just an example naming and they could as well be called something else, like anchor and booster, master and slave, or simply eNB_1 and eNB_2.

The security design of LTE generally provides compartmentalization of security functions. This compartmentalization is intended to ensure that if an attacker breaks the security of one function, only that function is compromised. For example, there is one key used for encryption of the RRC protocol and another key used for integrity protection of the RRC protocol. If an attacker breaks the encryption key, he can decrypt and read all RRC messages. However, since the integrity key is different from the encryption key, the attacker cannot modify or inject RRC messages.

Another aspect of the compartmentalization approach used in LTE is that each eNB uses a separate set of keys. The rationale for this is that this approach ensures that an attacker breaking in to one eNB does not gain any information about data transmitted between a wireless terminal and another physically different eNB. In a dual-connectivity scenario, then, to maintain the property that breaking into one physical RAN node, i.e., an eNB, does not help in attacking another RAN node, the assisting eNB should use its own key set, separate from the key set used in the anchor eNB.

In LTE systems, the RRC Security Mode Command procedure activates security, so that Resource Blocks (RBs) between the eNB and wireless terminal are protected. Following the RRC Security Mode Command procedure, security remains active until the wireless terminal or eNB terminates the RRC connection. This implies that when the eNB establishes a new DRB via an RRC reconfiguration procedure, security is already active and the eNB and wireless terminal will encrypt the Packet Data Convergence Protocol (PDCP) packets on the DRB from the beginning. Therefore, it follows that the DRBs that an anchor eNB establishes between the assisting eNB and the wireless terminal should also have security started from the beginning.

While it is clear that the RRC Security Mode Command procedure is used to start security for the DRBs associated with the assisting eNB, it is less clear how to select which encryption algorithms and, for relay nodes, which integrity protection algorithm, to use for the DRBs between the assisting eNB and the wireless terminal.

As part of the normal RRC Security Mode Command procedure, the serving eNB informs the wireless terminal about which encryption and integrity protection algorithms to use for future DRBs they establish between each other. The selected security algorithms are included in the Security Mode Command from the eNB to the wireless terminal. The eNB makes the selection based on information received from the core network regarding which security algorithms the wireless terminal supports, which security algorithms the eNB supports and a priority list stored in the eNB.

Two complications arise when including the assisting eNB in the architecture. The first complication is that the assisting eNB and the anchor eNB may not support the same set of security algorithms. As a result, it cannot simply be assumed that the assisting eNB and wireless terminal can use the same security algorithms for the DRBs they share as the wireless terminal and anchor eNB use. The second complication is that the anchor eNB may be connected to several assisting eNBs. If these assisting eNBs support different security algorithms and the anchor eNB does not know to which of these assisting eNBs the wireless terminal will be offloaded (if any one of them), the anchor eNB cannot inform the wireless terminal about which security algorithms to use with a potential future assisting eNB.

The techniques and apparatus presented herein are generally directed towards techniques implemented in a first node (e.g., an anchor eNB) for selection of a security algorithm for use between a wireless terminal and a second node (e.g., an assisting eNB). In some embodiments, these techniques include the following operations: determining a set of security algorithms supported by the terminal and a set of security algorithms supported by the second node; selecting the security algorithm from the intersection of said two sets; indicating the security algorithm to the terminal in a radio resource control procedure; and indicating the security algorithm to the second node.

As noted above, in a dual-connectivity scenario, the assisting base station and the anchor base station may not support the same set of security algorithms. Further, the anchor base station may not know ahead of time which of several assisting base stations (each potentially supporting different algorithms) will be used to serve the wireless terminal in a dual-connectivity scenario.

One approach to cope with these complications is for each of the assisting eNBs to inform the anchor eNB about which algorithms it supports. This could be done when the assisting eNB and anchor eNB sets up a long-lived relation, e.g., when IPsec protection is established between the two. It could also be done each time the anchor eNB instructs the assisting eNB to establish DRBs for a certain UE. Alternatively, the anchor eNB could also be configured with the security algorithms that each assisting eNB supports. In either case, once the anchor eNB has knowledge of which security algorithms the assisting eNB supports, the anchor eNB can take that information into account when selecting one or more security algorithms for the UE and assisting eNB to use. In some embodiments, the anchor eNB makes the choice just before commanding the assisting eNB to establish the DRB(s) and before informing the UE about the DRB(s) in the RRC Reconfiguration procedure. The selected (set of) security algorithm(s) can, for example, be included in a message in the RRC Connection Reconfiguration procedure or the Security Mode Command procedure.

In the event that the Security Mode Command procedure is used to indicate the selected algorithm or algorithms, a new Information Element (IE) can be introduced to indicate the Physical Cell Identity (PCI) for which the settings apply. Absent dual connectivity, there is only one serving cell, so there has been no prior need to explicitly indicate to which cell these settings apply. With dual connectivity, however, a UE may connect to two cells, in which case the PCI is needed to indicate to which cell the settings apply.

It is also possible to use identities other than the PCI to indicate to which cell or base station the security algorithms apply. For example, the eNB ID may be used, or a more specific identifier, such as the PCI in combination with an indicator of whether the communication is uplink or downlink. The identity may also be made more specific, by, for example combining the PCI with the DRB identity or frequency identifier, e.g., EARFCN-DL.

In the event that the RRC Connection Reconfiguration procedure is used to indicate the selected algorithm or algorithms, the IE *SecurityConfigHO* can be included in the *RRCConnectionReconfiguration* message. This IE also contains the same security related information as the security mode command, and when setting up the DRB via the assisting eNB it includes the algorithms to be used. The UE will know that this information will apply to the DRBs established via the assisting eNB. In one embodiment, the UE continues to use the old security configuration with the anchor eNB. In another embodiment, the UE and the anchor eNB both switch to using the security configuration based on the information in the *SecurityConfigHO* IE.

Other options include that the anchor eNB first informs the assisting eNB about the choice, and then the assisting eNB in turn forwards an indication of the chosen security algorithm or algorithms to the wireless terminal. Note that this latter indication needs to be integrity protected.

Even further options include that the anchor eNB informs the wireless terminal of which security algorithm or algorithms are to be used with the assisting eNB at the same time as it informs the wireless terminal about which security algorithms to use with the anchor eNB (e.g., in the security mode control procedure). This is possible if the eNB knows beforehand that all assisting eNBs support the same algorithms (or that they share a common set of acceptable algorithms).

In dual-connectivity scenarios, there is an option to establish DRBs that have different network termination points for uplink and downlink. For example, the downlink direction of the DRB may be terminated in the anchor eNB, and the uplink direction of the DRB may be terminated in the assisting eNB. For this case, an indication of the direction (UL/DL) to which an indicated security algorithm applies is also needed. This applies to both the Security Mode Command procedure and the RRC Connection Reconfiguration procedure. Note that the indication may be an explicit IE added to RRC messages according to one embodiment, but in other embodiments, it is implicitly conveyed to the UE. The indication could, for example, be implicitly conveyed in the event that assisting eNBs are only used for downlink DRBs. In that case, the UE knows the direction of the DRB. This is just one example - the UE could implicitly determine the direction of the DRB in question in other ways.

### Example methods

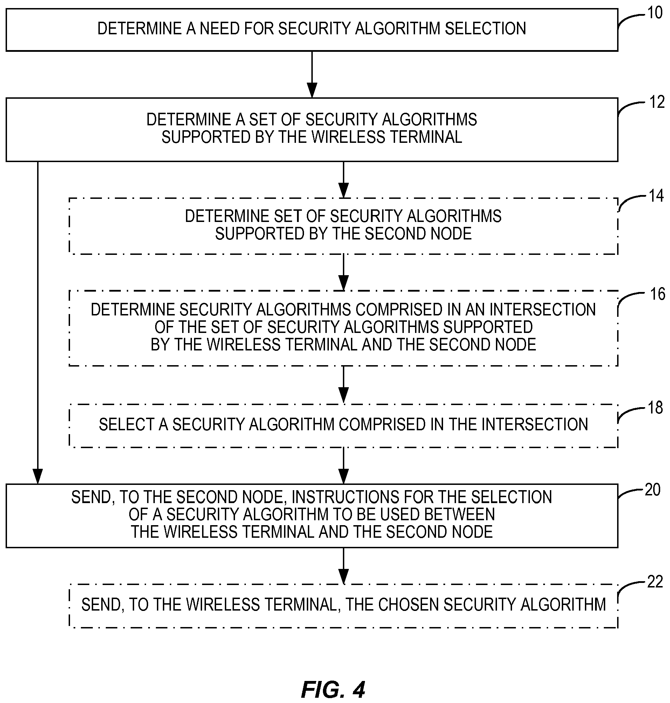

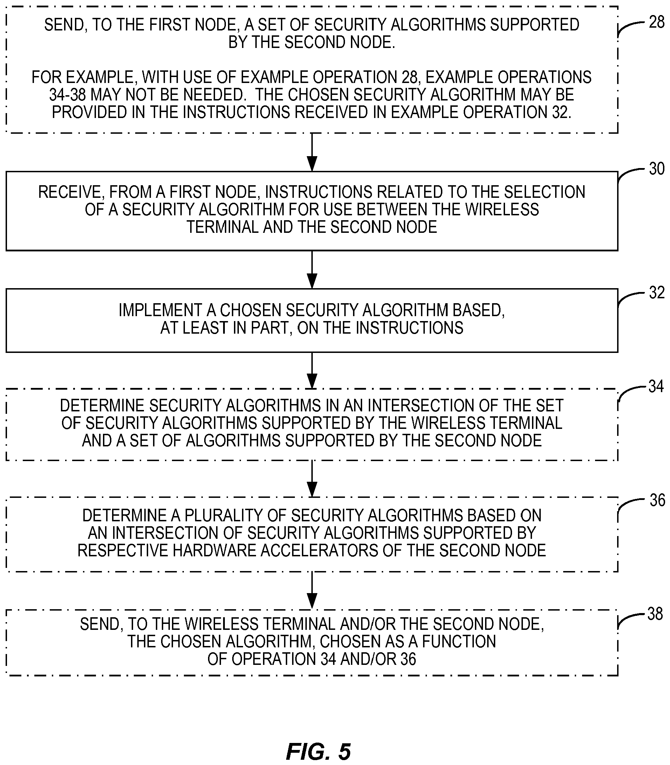

In view of the detailed examples described above, it will be appreciated that Figures 4 and 5 are flow diagrams depicting example operations which may be taken by an anchor base station and an assisting base station, respectively. The illustrated process flow diagrams include some operations that are illustrated with a solid border and some operations that are illustrated with a dashed border. The operations which are comprised in a solid border are operations which are included in the broadest example embodiments. The operations which are comprised in a dashed border are example embodiments which may be comprised in, or a part of, or are further operations which may be taken in addition to the operations of the broader example embodiments. Thus, those operations shown in dashed outlines may be considered "optional" in the sense that they may not appear in every instance of in every embodiment of the illustrated process. It should also be appreciated that the operations of Figures 4 and 5 are provided merely as examples.

More particularly, Figure 4 illustrates a process, in a first node, for determining a security algorithm to be used for secured communications between a wireless terminal and a second node while the wireless terminal is dually connected to the first node and to the second node. The process shown in Figure 4 may be implemented in an anchor base station, for example, such as an LTE anchor eNB.

As shown at block 10, the first node first determines a need for a security algorithm selection. This may be triggered by the establishment of a dual-connectivity scenario, for example. In response to this determining, the first node determines a set of security algorithms supported by the wireless terminal. This is shown at block 12. The first node also determines a set of security algorithms supported by the second node, as shown at block 14, and then determines which security algorithms are supported by both, i.e., which algorithms are included in the intersection of the set of algorithms supported by the wireless terminal and the set of algorithm supported by the second node. This is shown at block 16. An algorithm in this intersection is selected, as shown at block 18, and sent to the second node as an indication of which security algorithm is to be used between the wireless terminal and the second node, as shown at block 20. As shown at block 22, the first node may also send an indication of the selected algorithm to the wireless terminal.

Figure 5 illustrates a corresponding method such as might be carried out in the second node, e.g., in the assisting base station. In some embodiments, as shown at block 28, the second node first sends, to the first node, information identifying the security algorithms supported by the second node. As indicated in the figure, some of the subsequent operations in the feature may be unneeded if this approach is taken.

As seen at block 30, the second node receives instructions related to the selection of a security algorithm for use between the wireless terminal and the second node. More specifically, these instructions include an indication of one or more security algorithms to be used. As shown at block 32, the second node then implements a security algorithm, based on these instructions.

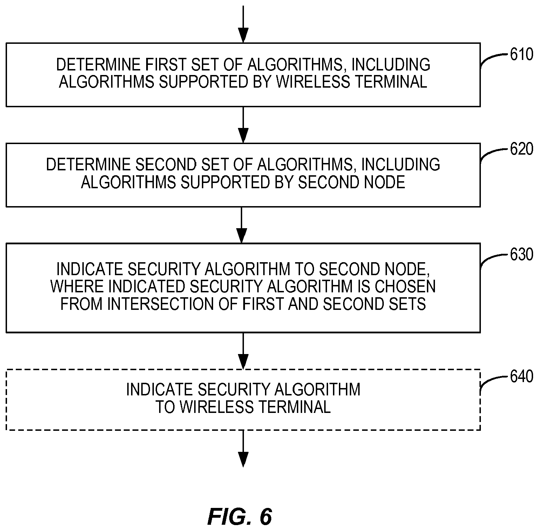

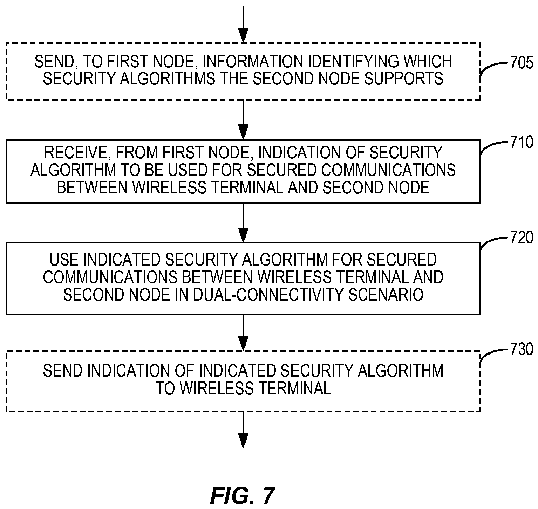

Figures 6 and 7 are additional process flow diagrams more generally illustrating methods carried out in the first and second nodes. These methods may be carried out in an LTE network, for example, but can also be applied to other wireless networks that employ dual-connectivity.

Figure 6 thus illustrates a method, suitable for implementation in a first node, for determining a security algorithm to be used for secured communications between a wireless terminal and a second node while the wireless terminal is dually connected to the first node and to the second node. As shown at block 610, the method includes determining a first set of security algorithms, the first set including those algorithms supported by the wireless terminal. This determining may include, for example, receiving information from a core network node, the information identifying which security algorithms are supported by the wireless terminal. A second set of security algorithms is also determined, as shown at block 620, where the second set includes those security algorithms that are supported by the second node. In some embodiments, this determining includes receiving information from the second node, the information identifying which security algorithms are supported by the second node. As shown at block 630, at least one security algorithm is then indicated to the second node, wherein the indicated security algorithm is chosen from the intersection of the first and second sets.

In some embodiments, the method further includes indicating the security algorithm to the wireless terminal, as shown at block 640. In some embodiments, this is done in a Radio Resource Control (RRC) Security Mode Command sent to the wireless terminal. In some of these embodiments, the Security Mode Command further indicates to which physical cell identity (PCI) the indicated security algorithm applies. In some of these and in other embodiments, indicating the security algorithm to the wireless terminal is performed at the same time as informing the wireless terminal of one or more security algorithms to be used for secured communications between the wireless terminal and the first node.

In other embodiments, indicating the security algorithm to the wireless terminal comprises indicating the security algorithm in a RRC Connection Reconfiguration procedure. In some of these and in some other embodiments, indicating the security algorithm to the wireless terminal includes an indication of whether the security algorithm applies to the uplink direction or downlink direction of a data radio bearer.

Figure 7 is a process flow diagram illustrating a corresponding method for determining a security algorithm to be sued for secured communications in a dual-connectivity scenario, where a wireless terminal is dually connected to a first node and to a second node. In this case, the illustrated method is suitable for implementation in the second node, such as an assisting base station.

As shown at block 710, the method includes receiving, from the first node, an indication of the security algorithm to be used for secured communications between the wireless terminal and the second node. As shown at block 720, the method further includes using the indicated security algorithm for secured communications between the wireless terminal and the second node while the wireless terminal is dually connected to the first node and to the second node.

In some embodiments, as shown at block 730, the second node sends, to the wireless terminal, an indication of the indicated security algorithm. This operation is indicated as "optional" in Figure 7, since it may not appear in those embodiments in which the wireless terminal is informed of the same information by the anchor base station. Likewise, as shown at block 705, the second node may in some embodiments, prior to receiving the indication of the security algorithm from the first node, send to the first node information identifying which security algorithms the second node supports. Again, this operation is indicated as "optional," as it may not appear in all embodiments.

### Example Hardware Implementations

Several of the techniques and methods described above may be implemented using electronic data processing circuitry and radio circuitry or other interface circuitry provided in a network node, such as an anchor base station or in an MME, while others may be implemented using radio circuitry and electronic data processing circuitry provided in a wireless terminal.

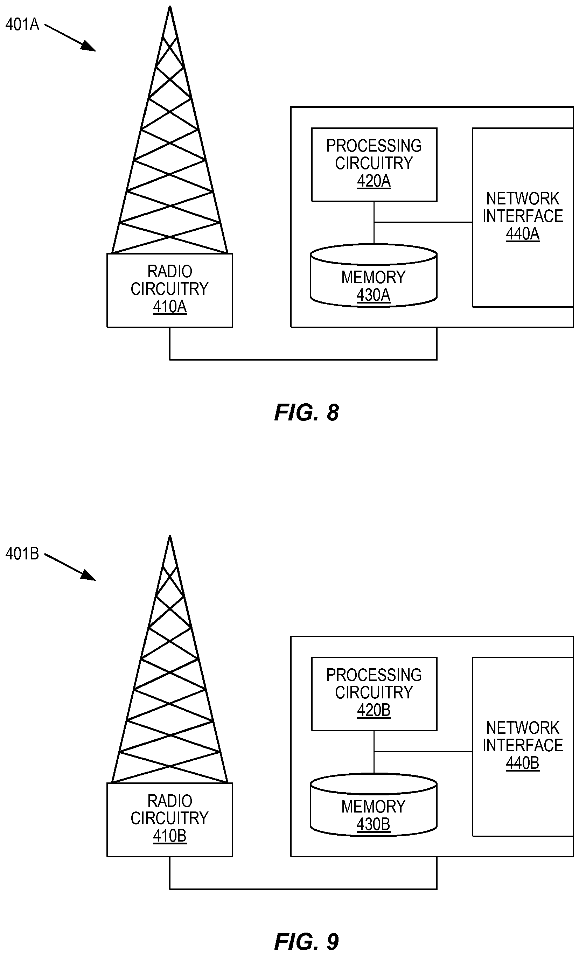

Figure 8 illustrates an example node configuration of a first node, e.g., an anchor base station, 401A which may perform some of the example embodiments described herein. The anchor base station 401A may comprise radio circuitry or a communication port 410A that may be configured to receive and/or transmit communication measurements, data, instructions, and/or messages. The anchor base station 401A may further comprise a network interface circuit 440A which may be configured to receive or send network communications, e.g., to and from other network nodes. It should be appreciated that the radio circuitry or communication port 410A may be comprised as any number of transceiving, receiving, and/or transmitting units or circuitry. It should further be appreciated that the radio circuitry or communication 410A may be in the form of any input or output communications port known in the art. The radio circuitry or communication 410A and/or network interface 440A may comprise RF circuitry and baseband processing circuitry, the details of which are well known to those familiar with base station design.

The anchor base station 401A may also comprise a processing unit or circuitry 420A which may be configured to perform operations related to the generation of assisting security keys (e.g., security keys for an assisting eNB), as described herein. The processing circuitry 420A may be any suitable type of computation unit, e.g. a microprocessor, digital signal processor (DSP), field programmable gate array (FPGA), or application specific integrated circuit (ASIC), or any other form of circuitry. The anchor base station 401A may further comprise a memory unit or circuitry 430A which may be any suitable type of computer readable memory and may be of volatile and/or non-volatile type. The memory 430A may be configured to store received, transmitted, and/or any information related to the generation of security keys or freshness parameters, device parameters, communication priorities, and/or executable program instructions.

Typical functions of the processing circuit 420A, e.g., when configured with appropriate program code stored in memory 430A, include modulation and coding of transmitted signals and the demodulation and decoding of received signals. In several embodiments of the present invention, processing circuit 420A is adapted, using suitable program code stored in program storage memory 430A, for example, to carry out one of the techniques described above for determining a security algorithm to be used for secured communications between a wireless terminal and a second node in a dual-connectivity scenario. Of course, it will be appreciated that not all of the steps of these techniques are necessarily performed in a single microprocessor or even in a single module.

It will be appreciated that the processing circuit 420A, as adapted with program code stored in program and data memory 430A, can implement the process flow of Figure 6 (or a variant thereof) using an arrangement of functional "modules," where the modules are computer programs or portions of computer programs executing on the processor circuit 420A. Thus, the apparatus 401A can be understood as comprising a communications interface 440A configured to communicate with a second node, and further comprising several functional modules implemented in processing circuitry 420A. These functional modules include: a determining module for determining a first set of security algorithms, wherein the first set is supported by the wireless terminal, and for determining a second set of security algorithms, wherein the second set is supported by the second network node; and an indicating module for indicating a security algorithm to the second network node, via the interface circuitry, wherein the indicated security algorithm is chosen from the intersection of the first and second sets.

Similarly, Figure 9 illustrates an example node configuration of a second node, e.g., an assisting base station, 401B which may perform some of the example embodiments described herein. The assisting base station 401B may comprise radio circuitry or a communication port 410B that may be configured to receive and/or transmit communication measurements, data, instructions, and/or messages. The assisting base station 401B may further comprise a network interface circuit 440B, which may be configured to receive or send network communications, e.g., to and from other network nodes. It should be appreciated that the radio circuitry or communication port 410B may be comprised as any number of transceiving, receiving, and/or transmitting units or circuitry. It should further be appreciated that the radio circuitry or communication 410B may be in the form of any input or output communications port known in the art. The radio circuitry or communication 410B and/or network interface 440B may comprise RF circuitry and baseband processing circuitry, the details of which are well known to those familiar with base station design.

The assisting base station 401B may also comprise a processing unit or circuitry 420B which may be configured to perform operations related to the activation of security functions, as described herein. The processing circuitry 420B may be any suitable type of computation unit, e.g. a microprocessor, digital signal processor (DSP), field programmable gate array (FPGA), or application specific integrated circuit (ASIC), or any other form of circuitry. The assisting base station 401B may further comprise a memory unit or circuitry 430B which may be any suitable type of computer readable memory and may be of volatile and/or non-volatile type. The memory 430B may be configured to store received, transmitted, and/or any information related to the generation of security keys or freshness parameters, device parameters, communication priorities, and/or executable program instructions.

Typical functions of the processing circuit 420B, e.g., when configured with appropriate program code stored in memory 430B, include modulation and coding of transmitted signals and the demodulation and decoding of received signals. In several embodiments of the present invention, processing circuit 420B is adapted, using suitable program code stored in program storage memory 430B, for example, to carry out one of the techniques described above for determining a security algorithm to be used for secured communications between a wireless terminal and a second node in a dual-connectivity scenario. Of course, it will be appreciated that not all of the steps of these techniques are necessarily performed in a single microprocessor or even in a single module.

It will be appreciated that the processing circuit 420B, as adapted with program code stored in program and data memory 430B, can implement the process flow of Figure 7 (or a variant thereof) using an arrangement of functional "modules," where the modules are computer programs or portions of computer programs executing on the processor circuit 420B. Thus, the apparatus 401B can be understood as comprising a communications interface 440B configured to communicate with a first node and a wireless terminal, and further comprising several functional modules implemented in processing circuitry 420B. These functional modules include: a receiving module for receiving from the first network node, via the interface circuitry, an indication of the security algorithm to be used for secured communications between the wireless terminal and the second network node; and a security module for applying the indicated security algorithm to secured communications between the wireless terminal and the second network node while the wireless terminal is dually connected to the first network node and to the second network node.

It will be appreciated by the person of skill in the art that various modifications may be made to the above described embodiments without departing from the scope of the present invention. For example, although embodiments of the present invention have been described with examples that include a communication system compliant to the 3GPP-specified LTE standards, it should be noted that the solutions presented may be equally well applicable to other networks that support dual connectivity. The specific embodiments described above should therefore be considered exemplary rather than limiting the scope of the invention. Because it is not possible, of course, to describe every conceivable combination of components or techniques, those skilled in the art will appreciate that the present invention can be implemented in other ways than those specifically set forth herein, without departing from essential characteristics of the invention. The present embodiments are thus to be considered in all respects as illustrative and not restrictive.

In the present description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) running on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the embodiments without substantially departing from the principles of the present inventive concepts. All such variations and modifications are intended to be included herein within the scope of present inventive concepts. Accordingly, the above disclosed subject matter is to be considered illustrative, and not restrictive, and the appended examples of embodiments are intended to cover all such modifications, enhancements, and other embodiments, which fall within the scope of present inventive concepts. Thus, to the maximum extent allowed by law, the scope of present inventive concepts are to be determined by the broadest permissible interpretation of the present disclosure, and shall not be restricted or limited by the foregoing detailed description.

## Claims

1. A method, in an anchor base station, for determining a security algorithm to be used for secured communications between a user equipment and an assisting base station while the user equipment is dually connected to the anchor base station and to the assisting base station, the method comprising:
determining (610) a first set of security algorithms, wherein the first set is supported by the user equipment;
determining (620) a second set of security algorithms, wherein the second set is supported by the assisting base station; and
indicating (630) a security algorithm to the assisting base station, wherein the indicated security algorithm is chosen from the intersection of the first and second sets.

2. The method of claim 1, further comprising indicating (640) the security algorithm to the user equipment.

3. The method of claim 2, wherein indicating (640) the security algorithm to the user equipment comprises indicating the security algorithm in a Radio Resource Control, RRC, Security Mode Command sent to the user equipment.

4. The method of claim 3, wherein the Security Mode Command further indicates to which physical cell identity, PCI, the indicated security algorithm applies.

5. The method of any of claims 2-4, wherein indicating (640) the security algorithm to the user equipment comprises indicating whether the security algorithm applies to the uplink direction or downlink direction of a data radio bearer.

6. The method of any of claims 1-5, wherein determining (620) the second set of security algorithms comprises receiving information from the assisting base station, the information identifying which security algorithms are supported by the assisting base station.

7. A method, in an assisting base station, for determining a security algorithm to be used for secured communications between a user equipment and the assisting base station while the user equipment is dually connected to an anchor base station and to the assisting base station, the method comprising:
receiving (710), from the anchor base station, an indication of the security algorithm to be used for secured communications between the user equipment and the assisting base station; and
using (720) the indicated security algorithm for secured communications between the user equipment and the assisting base station while the user equipment is dually connected to the anchor base station and to the assisting base station.

8. The method of claim 7, further comprising sending (730), to the user equipment, an indication of the indicated security algorithm.

9. The method of claim 7 or 8,further comprising, prior to receiving the indication of the security algorithm from the anchor base station, sending (705) to the anchor base station information identifying which security algorithms the assisting base station supports.

10. An anchor base station (401A) arranged to determine a security algorithm to be used for secured communications between a user equipment and an assisting base station while the user equipment is dually connected to the anchor base station and to the assisting base station, the anchor base station (401A) comprising interface circuitry (440A) configured to communicate with the assisting base station and further comprising processing circuitry (420A, 430A),
wherein the processing circuitry (420A, 430A) is configured to:
determine a first set of security algorithms, wherein the first set is supported by the user equipment;
determine a second set of security algorithms, wherein the second set is supported by the assisting base station; and
indicate a security algorithm to the assisting base station, via the interface circuitry (440A), wherein the indicated security algorithm is chosen from the intersection of the first and second sets.

11. The anchor base station (401A) of claim 10, wherein the processing circuitry (440A) is further configured to perform the method of any one of claims 2-6.

12. An assisting base station (401B) arranged to determine a security algorithm to be used for secured communications between a user equipment and an assisting base station while the user equipment is dually connected to the anchor base station and to the assisting base station, the assisting base station comprising interface circuitry (440B) configured to communicate with the anchor base station and the user equipment and further comprising processing circuitry (420B, 430B), wherein the processing circuitry (420B, 430B) is configured to:
receive from the anchor base station, via the interface circuitry (440B), an indication of the security algorithm to be used for secured communications between the user equipment and the assisting base station; and
use the indicated security algorithm for secured communications between the user equipment and the assisting base station while the user equipment is dually connected to the anchor base station and to the assisting base station.

13. A computer program product for determining a security algorithm to be used for secured communications between a user equipment and an assisting base station while the user equipment is dually connected to the anchor base station and to the assisting base station, the computer program product comprising program instructions for a processor in an anchor base station, said program instructions being configured so as to cause the anchor base station, when the program instructions are executed by the processor, to:
determine a first set of security algorithms, wherein the first set is supported by the user equipment;
determine a second set of security algorithms, wherein the second set is supported by the assisting base station; and
indicate a security algorithm to the assisting base station, wherein the indicated security algorithm is chosen from the intersection of the first and second sets.

14. A computer program product for determining a security algorithm to be used for secured communications between a user equipment and the assisting base station while the user equipment is dually connected to an anchor base station and to the assisting base station, the computer program product comprising program instructions for a processor in the assisting base station, wherein said program instructions are configured so as to cause the assisting base station, when the program instructions are executed by the processor, to:
receive, from the anchor base station, an indication of the security algorithm to be used for secured communications between the user equipment and the assisting base station; and
use the indicated security algorithm for secured communications between the user equipment and the assisting base station while the user equipment is dually connected to the anchor base station and to the assisting base station.

15. A computer-readable medium comprising the computer program product of claim 13 or claim 14.

## Patentansprüche

1. Verfahren in einer Anker-Basisstation zur Bestimmung eines Sicherheitsalgorithmus, der für gesicherte Kommunikationen zwischen einer Benutzereinrichtung und einer assistierenden Basisstation verwendet werden soll, während die Benutzereinrichtung mit der Anker-Basisstation und der assistierenden Basisstation doppelt verbunden ist; wobei das Verfahren umfasst:
Bestimmen (610) einer ersten Menge von Sicherheitsalgorithmen, wobei die erste Menge von der Benutzereinrichtung unterstützt wird;
Bestimmen (620) einer zweiten Menge von Sicherheitsalgorithmen, wobei die zweite Menge von der assistierenden Basisstation unterstützt wird;
Angeben (630) eines Sicherheitsalgorithmus für die assistierende Basisstation, wobei der angegebene Sicherheitsalgorithmus aus dem Schnitt der ersten und zweiten Mengen gewählt wird.

2. Verfahren nach Anspruch 1, ferner umfassend ein Angeben (640) des Sicherheitsalgorithmus für die Benutzereinrichtung.

3. Verfahren nach Anspruch 2, wobei das Angeben (640) des Sicherheitsalgorithmus für die Benutzereinrichtung ein Angeben des Sicherheitsalgorithmus in einem Funkressourcensteuerung, RRC,-Sicherheitsmodus-Befehl umfasst, der an die Benutzereinrichtung gesendet wird.

4. Verfahren nach Anspruch 3, wobei der Sicherheitsmodus-Befehl ferner angibt, auf welche physikalische Zellkennung, PCI, der angegebene Sicherheitsalgorithmus angewendet wird.

5. Verfahren nach einem der Ansprüche 2 bis 4, wobei das Angeben (640) des Sicherheitsalgorithmus für die Benutzereinrichtung ein Angeben umfasst, ob der Sicherheitsalgorithmus auf die Uplink-Richtung oder Downlink-Richtung eines Daten-Funkträgers angewendet wird.

6. Verfahren nach einem der Ansprüche 1 bis 5, wobei das Bestimmen (620) der zweiten Menge von Sicherheitsalgorithmen ein Empfangen von Informationen von der assistierenden Basisstation umfasst, wobei die Informationen identifizieren, welche Sicherheitsalgorithmen von der assistierenden Basisstation unterstützt werden.

7. Verfahren in einer assistierenden Basisstation zur Bestimmung eines Sicherheitsalgorithmus, der für gesicherte Kommunikationen zwischen einer Benutzereinrichtung und der assistierenden Basisstation verwendet werden soll, während die Benutzereinrichtung mit einer Anker-Basisstation und der assistierenden Basisstation doppelt verbunden ist; wobei das Verfahren umfasst:
Empfangen (710) von der Anker-Basisstation einer Angabe des Sicherheitsalgorithmus, der für gesicherte Kommunikationen zwischen der Benutzereinrichtung und
der assistierenden Basisstation verwendet werden soll;
Verwenden (720) des angegebenen Sicherheitsalgorithmus für gesicherte Kommunikationen zwischen der Benutzereinrichtung und der assistierenden Basisstation, während die Benutzereinrichtung mit der Anker-Basisstation und der assistierenden Basisstation doppelt verbunden ist.

8. Verfahren nach Anspruch 7, ferner umfassend ein Senden (730) einer Angabe des angegebenen Sicherheitsalgorithmus an die Benutzereinrichtung.

9. Verfahren nach Anspruch 7 oder 8, ferner umfassend ein Senden (705) von Informationen, die identifizieren, welche Sicherheitsalgorithmen die assistierende Basisstation unterstützt, vor dem Empfangen der Angabe des Sicherheitsalgorithmus von der Anker-Basisstation an die Anker-Basisstation.

10. Anker-Basisstation (401A), die so ausgelegt ist, dass sie einen Sicherheitsalgorithmus bestimmt, der für gesicherte Kommunikationen zwischen einer Benutzereinrichtung und einer assistierenden Basisstation verwendet werden soll, während die Benutzereinrichtung mit der Anker-Basisstation und der assistierenden Basisstation doppelt verbunden ist, wobei die Anker-Basisstation (401A) Schnittstellenschaltungsanordnung (440A) umfasst, die zum Kommunizieren mit der assistierenden Basisstation konfiguriert ist, und ferner Verarbeitungsschaltungsanordnung (420A, 430A) umfasst, wobei die Verarbeitungsschaltungsanordnung (420A, 430A) konfiguriert ist zum:
Bestimmen einer ersten Menge von
Sicherheitsalgorithmen, wobei die erste Menge von der Benutzereinrichtung unterstützt wird;
Bestimmen einer zweiten Menge von Sicherheitsalgorithmen, wobei die zweite Menge von der assistierenden Basisstation unterstützt wird;
Angeben eines Sicherheitsalgorithmus für die assistierende Basisstation über die Schnittstellenschaltungsanordnung (440A), wobei der angegebene Sicherheitsalgorithmus aus dem Schnitt der ersten und zweiten Mengen gewählt wird.

11. Anker-Basisstation (401A) nach Anspruch 10, wobei die Verarbeitungsschaltungsanordnung (440A) ferner zum Durchführen des Verfahrens nach einem der Ansprüche 2 bis 6 konfiguriert ist.

12. Assistierende Basisstation (401B), die so ausgelegt ist, dass sie einen Sicherheitsalgorithmus bestimmt, der für gesicherte Kommunikationen zwischen einer Benutzereinrichtung und einer assistierenden Basisstation verwendet werden soll, während die Benutzereinrichtung mit der Anker-Basisstation und der assistierenden Basisstation doppelt verbunden ist, wobei die assistierende Basisstation Schnittstellenschaltungsanordnung (440B) umfasst, die zum Kommunizieren mit der Anker-Basisstation und der Benutzereinrichtung konfiguriert ist, und ferner Verarbeitungsschaltungsanordnung (420B, 430B) umfasst, wobei die Verarbeitungsschaltungsanordnung (420B, 430B) konfiguriert ist zum:
Empfangen einer Angabe des Sicherheitsalgorithmus, der für gesicherte Kommunikationen zwischen der Benutzereinrichtung und der assistierenden Basisstation verwendet werden soll, über die Schnittstellenschaltungsanordnung (440B) von der Anker-Basisstation;
Verwenden des angegebenen Sicherheitsalgorithmus für gesicherte Kommunikationen zwischen der Benutzereinrichtung und der assistierenden Basisstation, während die Benutzereinrichtung mit der Anker-Basisstation und der assistierenden Basisstation doppelt verbunden ist.

13. Computerprogrammprodukt zum Bestimmen eines Sicherheitsalgorithmus, der für gesicherte Kommunikationen zwischen einer Benutzereinrichtung und einer assistierenden Basisstation verwendet werden soll, während die Benutzereinrichtung mit der Anker-Basisstation und der assistierenden Basisstation doppelt verbunden ist, wobei das Computerprogrammprodukt Programmanweisungen für einen Prozessor in einer Anker-Basisstation umfasst, wobei die Programmanweisungen so konfiguriert sind, dass sie die Anker-Basisstation bei Ausführung der Programmanweisungen durch den Prozessor veranlassen zum:
Bestimmen einer ersten Menge von Sicherheitsalgorithmen, wobei die erste Menge von der Benutzereinrichtung unterstützt wird;
Bestimmen einer zweiten Menge von Sicherheitsalgorithmen, wobei die zweite Menge von der assistierenden Basisstation unterstützt wird;
Angeben eines Sicherheitsalgorithmus für die assistierende Basisstation, wobei der angegebene Sicherheitsalgorithmus aus dem Schnitt der ersten und zweiten Mengen gewählt wird.

14. Computerprogrammprodukt zum Bestimmen eines Sicherheitsalgorithmus, der für gesicherte Kommunikationen zwischen einer Benutzereinrichtung und der assistierenden Basisstation verwendet werden soll, während die Benutzereinrichtung mit einer Anker-Basisstation und der assistierenden Basisstation doppelt verbunden ist, wobei das Computerprogrammprodukt Programmanweisungen für einen Prozessor in der assistierenden Basisstation umfasst, wobei die Programmanweisungen so konfiguriert sind, dass sie die assistierende Basisstation bei Ausführung der Programmanweisungen durch den Prozessor veranlassen zum:
Empfangen von der Anker-Basisstation einer Angabe des Sicherheitsalgorithmus, der für gesicherte Kommunikationen zwischen der Benutzereinrichtung und
der assistierenden Basisstation verwendet werden soll;
Verwenden des angegebenen Sicherheitsalgorithmus für gesicherte Kommunikationen zwischen der Benutzereinrichtung und der assistierenden Basisstation, während die Benutzereinrichtung mit der Anker-Basisstation und der assistierenden Basisstation doppelt verbunden ist.

15. Computerlesbares Medium, umfassend das Computerprogrammprodukt nach Anspruch 13 oder 14.

## Revendications

1. Procédé, dans une station de base d'ancrage, de détermination d'un algorithme de sécurité à utiliser pour des communications sécurisées entre un équipement d'utilisateur et une station de base d'assistance pendant que l'équipement d'utilisateur est connecté à la fois à la station de base d'ancrage et à la station de base d'assistance, le procédé comprenant :
la détermination (610) d'un premier ensemble d'algorithmes de sécurité, dans lequel le premier ensemble est pris en charge par l'équipement d'utilisateur ;
la détermination (620) d'un deuxième ensemble d'algorithmes de sécurité, dans lequel le deuxième ensemble est pris en charge par la station de base d'assistance ; et
l'indication (630) d'un algorithme de sécurité à la station de base d'assistance, dans lequel l'algorithme de sécurité indiqué est choisi à partir de l'intersection des premier et deuxième ensembles.

2. Procédé selon la revendication 1, comprenant en outre l'indication (640) de l'algorithme de sécurité à l'équipement d'utilisateur.

3. Procédé selon la revendication 2, dans lequel l'indication (640) de l'algorithme de sécurité à l'équipement d'utilisateur comprend l'indication de l'algorithme de sécurité dans une commande de mode de sécurité de commande de ressources radio, RRC, envoyée à l'équipement d'utilisateur.

4. Procédé selon la revendication 3, dans lequel la commande de mode de sécurité indique en outre à quelle identité de cellule physique, PCI, l'algorithme de sécurité indiqué s'applique.

5. Procédé selon l'une quelconque des revendications 2 à 4, dans lequel l'indication (640) de l'algorithme de sécurité à l'équipement d'utilisateur comprend l'indication si l'algorithme de sécurité s'applique au sens de liaison montante ou au sens de liaison descendante d'un support radio de données.

6. Procédé selon l'une quelconque des revendications 1 à 5, dans lequel la détermination (620) du deuxième ensemble d'algorithmes de sécurité comprend la réception d'informations en provenance de la station de base d'assistance, les informations identifiant les algorithmes de sécurité qui sont pris en charge par la station de base d'assistance.

7. Procédé, dans une station de base d'assistance, de détermination d'un algorithme de sécurité à utiliser pour des communications sécurisées entre un équipement d'utilisateur et la station de base d'assistance pendant que l'équipement d'utilisateur est connecté à la fois à une station de base d'ancrage et à la station de base d'assistance, le procédé comprenant :
la réception (710), en provenance de la station de base d'ancrage, d'une indication de l'algorithme de sécurité à utiliser pour des communications sécurisées entre l'équipement d'utilisateur et la station de base d'assistance ; et
l'utilisation (720) de l'algorithme de sécurité indiqué pour des communications sécurisées entre l'équipement d'utilisateur et la station de base d'assistance pendant que l'équipement d'utilisateur est connecté à la fois à la station de base d'ancrage et à la station de base d'assistance.

8. Procédé selon la revendication 7, comprenant en outre l'envoi (730), à l'équipement d'utilisateur, d'une indication de l'algorithme de sécurité indiqué.

9. Procédé selon la revendication 7 ou 8, comprenant en outre, avant la réception de l'indication de l'algorithme de sécurité en provenance de la station de base d'ancrage, l'envoi (705), à la station de base d'ancrage, d'informations identifiant les algorithmes de sécurité que la station de base d'assistance prend en charge.

10. Station de base d'ancrage (401A) agencée pour la détermination d'un algorithme de sécurité à utiliser pour des communications sécurisées entre un équipement d'utilisateur et une station de base d'assistance pendant que l'équipement d'utilisateur est connecté à la fois à la station de base d'ancrage et à la station de base d'assistance, la station de base d'ancrage (401A) comprenant une circuiterie d'interface (440A) configurée pour communiquer avec la station de base d'assistance, et comprenant en outre une circuiterie de traitement (420A, 430A), dans laquelle la circuiterie de traitement (420A, 430A) est configurée pour effectuer :
la détermination d'un premier ensemble d'algorithmes de sécurité, dans laquelle le premier ensemble est pris en charge par l'équipement d'utilisateur ;
la détermination d'un deuxième ensemble d'algorithmes de sécurité, dans laquelle le deuxième ensemble est pris en charge par la station de base d'assistance ; et
l'indication d'un algorithme de sécurité à la station de base d'assistance, par l'intermédiaire de la circuiterie d'interface (440A), dans laquelle l'algorithme de sécurité indiqué est choisi à partir de l'intersection des premier et deuxième ensembles.

11. Station de base d'ancrage (401A) selon la revendication 10, dans laquelle la circuiterie de traitement (440A) est en outre configurée pour effectuer le procédé selon l'une quelconque des revendications 2 à 6.

12. Station de base d'assistance (401B) agencée pour la détermination d'un algorithme de sécurité à utiliser pour des communications sécurisées entre un équipement d'utilisateur et une station de base d'assistance pendant que l'équipement d'utilisateur est connecté à la fois à la station de base d'ancrage et à la station de base d'assistance, la station de base d'assistance comprenant une circuiterie d'interface (440B) configurée pour communiquer avec la station de base d'ancrage et l'équipement d'utilisateur et comprenant en outre une circuiterie de traitement (420B, 430B), dans laquelle la circuiterie de traitement (420B, 430B) est configurée pour effectuer :
la réception, en provenance de la station de base d'ancrage, par l'intermédiaire de la circuiterie d'interface (440B), d'une indication de l'algorithme de sécurité à utiliser pour des communications sécurisées entre l'équipement d'utilisateur et la station de base d'assistance ; et
l'utilisation de l'algorithme de sécurité indiqué pour des communications sécurisées entre l'équipement d'utilisateur et la station de base d'assistance pendant que l'équipement d'utilisateur est connecté à la fois à la station de base d'ancrage et à la station de base d'assistance.

13. Produit de programme informatique pour la détermination d'un algorithme de sécurité à utiliser pour des communications sécurisées entre un équipement d'utilisateur et une station de base d'assistance pendant que l'équipement d'utilisateur est connecté à la fois à la station de base d'ancrage et à la station de base d'assistance, le produit de programme informatique comprenant des instructions de programme pour un processeur dans une station de base d'ancrage, lesdites instructions de programme étant configurées de manière à amener la station de base d'ancrage, lorsque les instructions de programme sont exécutées par le processeur, à effectuer :
la détermination d'un premier ensemble d'algorithmes de sécurité, dans lequel le premier ensemble est pris en charge par l'équipement d'utilisateur ;
la détermination d'un deuxième ensemble d'algorithmes de sécurité, dans lequel le deuxième ensemble est pris en charge par la station de base d'assistance ; et
l'indication d'un algorithme de sécurité à la station de base d'assistance, dans lequel l'algorithme de sécurité indiqué est choisi à partir de l'intersection des premier et deuxième ensembles.

14. Produit de programme informatique pour la détermination d'un algorithme de sécurité à utiliser pour des communications sécurisées entre un équipement d'utilisateur et la station de base d'assistance pendant que l'équipement d'utilisateur est connecté à la fois à une station de base d'ancrage et à la station de base d'assistance, le produit de programme informatique comprenant des instructions de programme pour un processeur dans la station de base d'ancrage, dans lequel lesdites instructions de programme sont configurées de manière à amener la station de base d'assistance, lorsque les instructions de programme sont exécutées par le processeur, à effectuer :
la réception, en provenance de la station de base d'ancrage, d'une indication de l'algorithme de sécurité à utiliser pour des communications sécurisées entre l'équipement d'utilisateur et la station de base d'assistance ; et
l'utilisation de l'algorithme de sécurité indiqué pour des communications sécurisées entre l'équipement d'utilisateur et la station de base d'assistance pendant que l'équipement d'utilisateur est connecté à la fois à la station de base d'ancrage et à la station de base d'assistance.

15. Support lisible par ordinateur comprenant le produit de programme informatique selon la revendication 13 ou 14.
